# EUROPÄISCHE PATENTSCHRIFT

(11) **EP 3 962 728 B1**
(45) Veröffentlichungstag und Bekanntmachung des Hinweises auf die Patenterteilung: **26.06.2024**
(21) Anmeldenummer: 21712396.7
(22) Anmeldetag: 04.03.2021
(51) Int. Cl.: B32B 5/06, B32B 5/18, B32B 7/08, B32B 21/04

(54) **SANDWICHELEMENT UND VERFAHREN ZUR HERSTELLUNG EINES SANDWICHELEMENTES**
SANDWICH ELEMENT AND METHOD OF MANUFACTURING A SANDWICH ELEMENT
ÉLÉMENT SANDWICH ET PROCÉDÉ DE FABRICATION D'UN ÉLÉMENT SANDWICH

(30) Priorität: 29.05.2020 AT 504712020
(43) Veröffentlichungstag der Anmeldung: 09.03.2022
(73) Patentinhaber: Ritsch, Ingomar, 6300 Wörgl (AT)
(72) Erfinder: Ritsch, Ingomar, 6300 Wörgl (AT)
(74) Vertreter: Farago-Schauer, Peter Andreas
(86) Internationale Anmeldenummer: PCT/AT2021/060073
(87) Internationale Veröffentlichungsnummer: WO 2021/237257

(56) Entgegenhaltungen:
- WO-A1-2018/031270
- WO-A1-2019/056117
- WO-A1-2020/014156
- CN-A- 107 433 755
- CN-A- 110 093 996
- DE-B4-102008 022 591
- DE-U1- 9 310 222
- DE-U1-202018 002 540
- US-A1- 2005 006 023
- US-A1- 2016 258 116
- US-A1- 2017 368 788
- US-A1- 2019 232 602

## Beschreibung

Die Erfindung betrifft ein Sandwichelement gemäß Oberbegriff des Anspruchs 1, ein Verfahren zur Herstellung eines Sandwichelementes und ein Verfahren zur Herstellung eines Trägers, insbesondere einer schwimmfähigen Plattform, aus derartigen Sandwichelementen, sowie einen Träger, insbesondere eine schwimmfähige Plattform.

Ein derartiges Sandwichelement, das insbesondere als Türblatt verwendet werden kann, ist beispielsweise der DE 1811544 U zu entnehmen. Eine Mittelschicht aus geschäumtem Polystyrol ist mit dort den beiden Außenschichten verhaftet, insbesondere verklebt. Ein weiteres derartiges Sandwichelement, das eine verbesserte Biegefestigkeit aufweist und daher insbesondere als Gerüstboden verwendet werden kann, ist beispielsweise aus der DE 29606549 U bekannt. Die erhöhte Biegefestigkeit wird dort durch eine die Schubspannungen sicher aufnehmende feste Verbindung zwischen den einzelnen Schichten erreicht.

Die Erfindung beschreitet nun einen anderen Weg zur Lösung der Aufgabe einer Erhöhung der Biegefestigkeit derartiger Sandwichelemente und daraus gebildeter schwimmfähiger Plattformen, da einem Reibungs- oder Kraftschluss zwischen der Mittelschicht und jeder Außenschicht Grenzen gesetzt sind.

Erfindungsgemäß wird eine nochmals deutlich erhöhte Biegefestigkeit des Sandwichelementes durch die Merkmale des Anspruchs 1 erreicht.

Durch die die Mittelschicht durchsetzenden Spannelemente kann über die gesamte Fläche der Druckplatten eine gleichmäßige Kompression des Füllmaterials erzielt werden. In einer ersten bevorzugten Ausführung ist das Sandwichelement langgestreckt quaderförmig und weist an der Oberseite und an der Unterseite je eine Druckplatte auf. Die Kompression der Mittelschicht kann dabei bevorzugt dadurch erreicht und aufrecht erhalten werden, dass die Druckplatten mittels die Mittelschicht durchsetzenden Spannelementen gegeneinander verspannt sind. Die Spannelemente können später im Bedarfsfall auch nachgespannt werden.

Zur Herstellung eines derartigen Sandwichelementes ist erfindungsgemäß ein Verfahren mit den Merkmalen des Anspruchs 11 vorgesehen.

Die Mittelschicht besteht aus geschäumtem Füllmaterial. Als vorteilhaft hat es sich dabei herausgestellt, wenn die Mittelschicht aus expandiertem thermoplastischem Kunststoff, Polystyrol, besteht.

Als Spannelemente, die die oberen und unteren Deckplatten verbinden, werden Spannschrauben verwendet. Spannelemente, die sich parallel zu den Außenschichten erstrecken, sind bevorzugt mit Seileversehen.

In einer weiteren bevorzugten Ausführung ist vorgesehen, dass die Druckplatten aus Holzwerkstoffen, insbesondere aus Brettsperrholz gefertigt sind, wobei sich insbesondere Platten eignen, die durch eine entsprechende Behandlung wasserfest sind.

Die Sandwichelemente weisen aufgrund der verwendeten Materialien ein relativ geringes Gewicht auf, und können aufgrund der hohen Biegefestigkeit als langgestreckte, tragende Teile eingesetzt werden. Dabei ist es auch möglich schwimmfähige Plattformen insbesondere für Flussfahrzeuge herzustellen, indem mehrere Sandwichelemente nebeneinander gelegt, und durch weitere Spannelemente horizontal zu einer tragfähigen Großfläche verbunden werden.

Nachstehend wird nun die Erfindung an Hand der Figuren der beiliegenden Zeichnung näher beschrieben, ohne darauf beschränkt zu sein. Es zeigen:
- Fig. 1: einen schematischen Längsschnitt durch ein erfindungsgemäßes Sandwichelement nach der Linie I - I der Fig. 2, und
- Fig. 2: eine schematische Draufsicht auf eine aus mehreren aneinander gereihten Sandwichelementen nach Fig. 1 hergestellte Plattform.
- Fig. 3a-3c: einen schematischen Schnitt in einer Linienführung II-II der Fig. 2.
- Fig. 4: ein Ausführungsbeispiel einer aus mehreren Großflächen gebildeten schwimmfähigen Plattform in einer Schnittdarstellung.

Ein Sandwichelement (Modul) 1, insbesondere in Form eines langgestreckten Streifens, weist eine Mittelschicht 10 auf, die bevorzugt aus expandiertem Polystyrol besteht. Das Sandwichelement 1 ist an der Ober- und an der Unterseite mit je einer Druckplatte 2, 3 versehen. Die beiden Druckplatten 2, 3 werden durch vertikale Spannelemente 4, die die Mittelschicht 10 durchsetzen, gegeneinander verspannt, wodurch die Mittelschicht 10 gestaucht oder komprimiert, und die Biegefestigkeit des Sandwichelementes 1 erhöht wird, sodass die Sandwichelemente als tragende Teile verwendet werden können. Die Spannelemente 4 greifen jeweils in Spannmuttern bzw. Spannankern 5 an den Außenseiten der Druckplatten 2, 3 ein. Die Spannelemente 4 sind schematisch als einzelne Stäbe oder Spannbolzen gezeigt. Vorzugsweise durchsetzen sie aber die Mittelschicht 10 in Art eines Fachwerkes wechselweise schräg zueinander. Die Druckplatten 2, 3 bestehen vorteilhaft aus Holzwerkstoffen, insbesondere aus Brettsperrholz. Die beiden Stirnseiten der Mittelschicht 10 können zum Schutz gegen äußere Einwirkungen durch Platten 6, 7 abgedeckt sein.

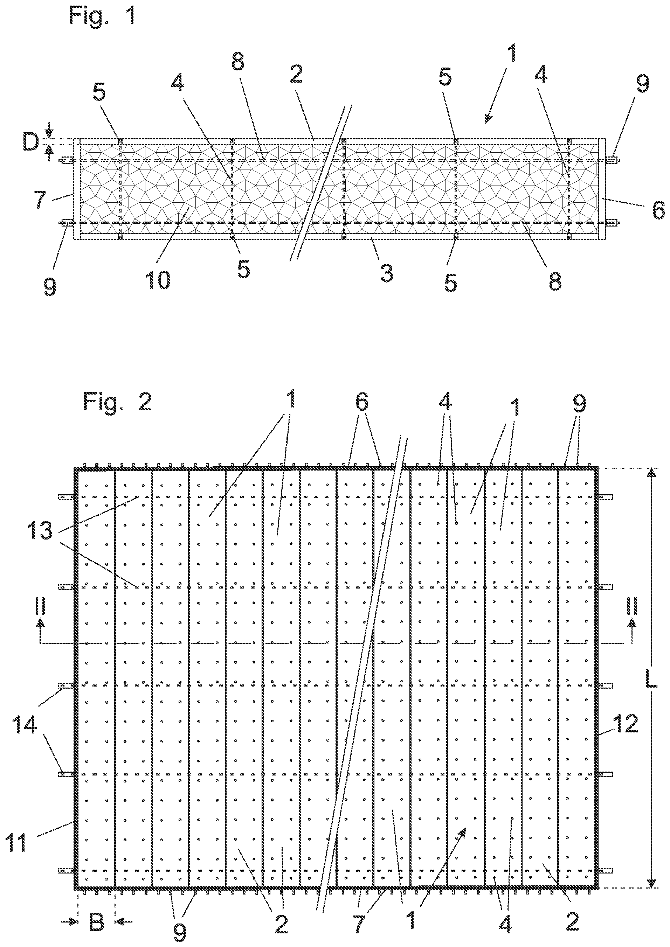

Das einzelne Sandwichelement gemäß Figur 1 (Modul) ist - wie bereits erwähnt länglich ausgeführt, wobei seine Länge L ein Vielfaches, mindestens das Fünffache, seiner Breite B beträgt. Durch diese längliche Ausbildung lassen sich im Wesentlichen "Balken" bilden, aus denen dann, wie später die Figur 2 zeigen wird, eine schwimmfähige Plattform gebildet werden kann. Durch die modulartige Ausbildung kann durch die Anzahl der verwendeten Sandwichelemente (Module) 1 eine leichte Anpassung an die jeweiligen Bedürfnisse (Abmessungen) der letztlich gewünschten Plattform erzielt werden.

Die Mittelschicht besteht aus thermoplastischem Kunststoff, vorzugsweise Polystyrol.

Die Dicke D der Druckplatten 2, 3 liegt bevorzugt zwischen 1 cm und 30 cm und ganz bevorzugt zwischen 2 cm und 5 cm.

Die Länge L der Druckplatten 2, 3 liegt bevorzugt zwischen 100 cm und 800 cm, ganz bevorzugt zwischen 150 cm und 600 cm.

Die Breite B der Druckplatten liegt bevorzugt zwischen 20 cm und 80 cm, ganz bevorzugt zwischen 25 cm und 60 cm.

Die oben genannten Dimensionierungen erlauben die Herstellung von schwimmfähigen Plattformen in einer stabilen Ausführung, die auch große Lasten, insbesondere Fahrzeuge, tragen kann.

Die Dichte des zwischen den Druckplatten 2, 3 komprimieten Füllmaterials liegt vorzugsweise zwischen 15 kg/m³ und 150 kg/m³. Durch diese relativ niedere Dichte kann zusammen mit dem Holzwerkstoff der Druckplatten eine niedere Gesamtdichte und damit ein hoher Auftrieb und letztlich eine hohe Tragfähigkeit erzielt werden.

Die Erfindung betrifft weiters ein Verfahren zur Herstellung eines Sandwichelementes. Dieses Verfahren ist dadurch gekennzeichnet, dass eine formstabile Mittelschicht (10) aus einem geschäumten Füllmaterial, Kunststoff, hergestellt wird, die anschließend mit einer unteren und einer oberen Druckplatte (2, 3) versehen wird, und schließlich mittels Spannelementen (4), die jeweils die Mittelschicht (10) durchsetzen, unter Komprimierung des Füllmaterials zwischen den einander gegenüber liegenden Druckplatten (2, 3) eingespannt wird.

Es wird also nicht ein Zwischenraum zwischen Platten nachträglich ausgeschäumt, sondern von einer bereits formstabilen Mittelschicht ausgegangen, die aus einem geschäumten Füllmaterial besteht, das ein Kunststoffschaum ist, der bereits weitegehend ausgehärtet ist. Anschließend wird durch die Druckplatten und die Spannelemente diese Mittelschicht erfindungsgemäß komprimiert, um insgesamt die Biegesteifigkeit des gesamten Sandwichelementes zu erhöhen.

Vorzugsweise ist vorgesehen, dass die Mittelschicht durch die Druckplatten 2, 3 und die Spannelemente 4 auf ein Volumen zwischen 1 % und 80 %, vorzugsweise zwischen 10 % und 50 %, des ursprünglichen unkomprimierten Volumens komprimiert wird.

Fig. 2 zeigt die Verwendung einer Vielzahl von streifenförmigen oder quaderförmigen Sandwichelementen 1, die mit ihren nicht abgedeckten Längsseiten zu einer Plattform nebeneinander gereiht und miteinander verbunden sind. Eine derartige Plattform ist schwimmfähig und kann beispielsweise eine Größe von 75 m mal 18 m aufweisen. Sie kann aufgrund der erhöhten Biegefestigkeit der einzelnen Sandwichelemente 1 auch als Flussfahrzeug zum Transport von Gütern in der Flussschifffahrt eingesetzt werden. Zur Verbindung der nebeneinander gereihten Sandwichelemente 1 untereinander werden wiederum Spannelemente 13 und Spannanker 14 verwendet, die an weiteren seitlichen Druckplatten 11, 12 an der Plattform angeordnet sind, sodass die direkt aneinander liegenden Mittelschichten 10 der Sandwichelemente 1 zwischen den Druckplatten 11, 12 auch in dieser Richtung komprimiert werden. Die horizontalen Spannelemente 13 sind bevorzugt durch Spannseile oder dergleichen gebildet.

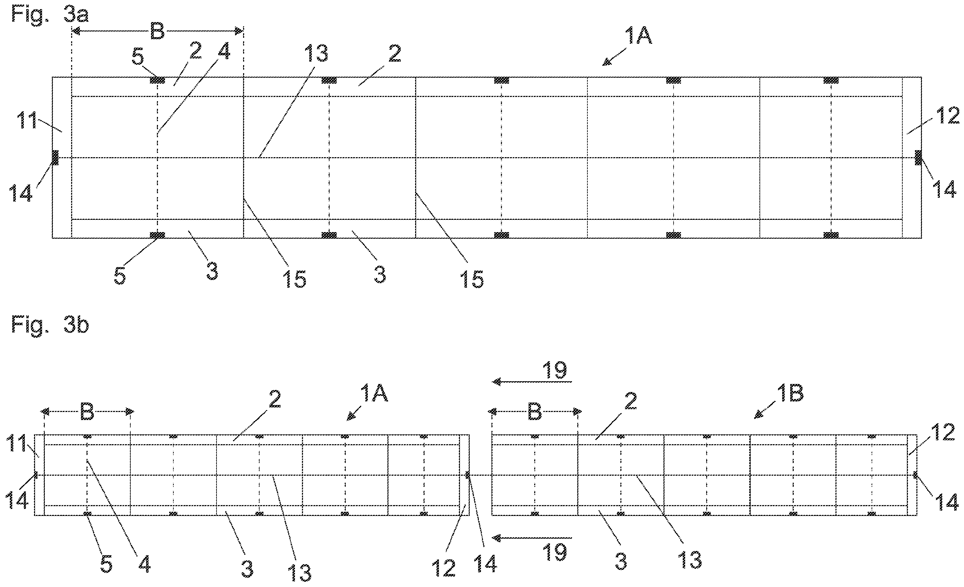

Die Figuren 3a bis 3c zeigen, wie aus einzelnen Modulen durch seitliches Zusammenfügen und Spannen über die Seile 13 größere Einheiten gebildet werden können, insbesondere letztlich eine schwimmfähige Plattform.

Die einzelnen Sandwichelemente werden an den Stoßkanten 15 aneinandergefügt, über Spannelemente 14 können dann die Seile 13 gespannt werden, womit insgesamt eine stabile Baueinheit erzielt wird.

Die Figur 3a entspricht bis auf die Zahl der Sandwichelemente im Wesentlichen der Figur 2.

Ausgehend von einem solchen Zusammenbau der fünf Sandwichelemente der Figur 3a kann, wie Figur 3b zeigt, eine weitere Fünfergruppe in Pfeilrichtung 19 wiederum durch Spannen von Seilen 13 angefügt werden. Es kann hier ein durchgehendes Seil verwendet werden. Es ist aber auch möglich, an der rechten Platte 12 der tragfähigen (schwimmfähigen) Großfläche 1A ein gesondertes Seil 13 anzubringen und das dann über das Spannelement 14 von der ganz rechten Platte 12 der Großfläche 1Bzu spannen.

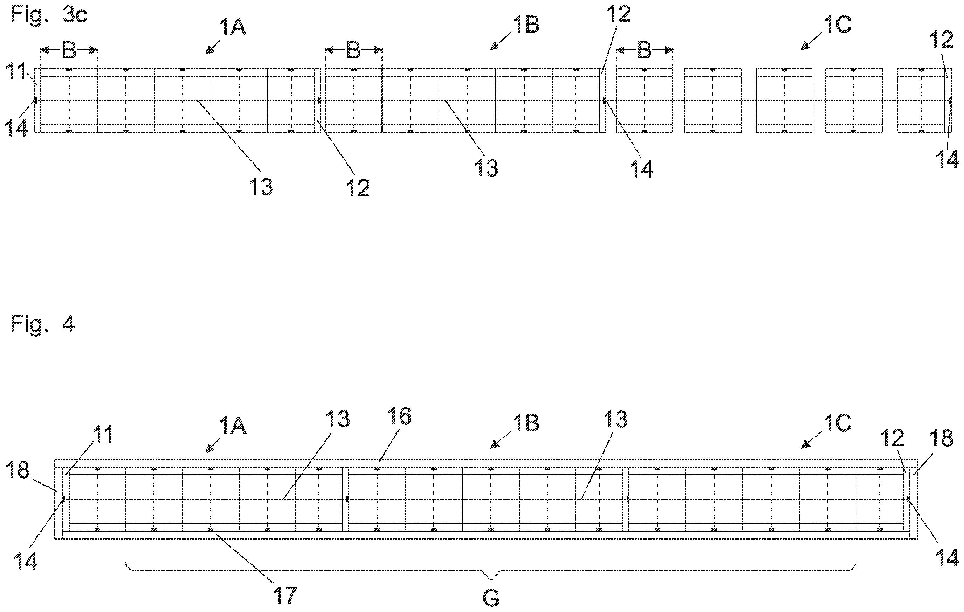

Die Figur 3c zeigt, wie eine weitere Fünfergruppe von Sandwichelementen hinzugefügt werden kann. Das kann auch durch einzelne Sandwichelemente erfolgen, die erst gespannt werden, wenn sie an die übrigen Sandwichelemente angefügt werden. Es ist aber auch - wie in Figur 3b gezeigt - möglich, vorher schon Baugruppen aus jeweils fünf Sandwichelementen zu bilden. Letztlich hat man dann eine stabile größere Einheit G, die als schwimmfähige Plattform verwendet werden kann.

Diese Einheit G kann dann durch weitere Bauteile zu einer fertigen schwimmfähigen Plattform aufgebaut werden, wie das Ausführungsbeispiel gemäß Figur 4 zeigt. Oben befindet sich eine geschlossene Fahrbahn 16, unten eine Gleitplatte 17. Diese beiden Bauteile (Fahrbahn 16 und untere Gleitplatte 17) sind vorzugsweise großflächig ausgebildet und überdecken die Stoßkanten zwischen den einzelnen Modulen/Sandwichelementen.

Seitlich kann noch jeweils eine Schutzplanke 18 vorgesehen sein, um beim Anstoßen der schwimmfähigen Plattform, beispielsweise an Hafenbauteilen oder anderen schwimmfähigen Plattformen, keine Beschädigung hervorzurufen.

Wie man aus der Figur 3 sieht, ist bereits, ohne die Fahrbahn 16 und die Gleitplatte 17, vorgesehen, dass das Füllmaterial allseitig beplankt ist. In Figur 4 ist diese Beplankung sogar doppelt ausgeführt, nämlich durch die Teile 16, 17 und 18.

Wie bereits erwähnt, eignet sich die Erfindung insbesondere zum Aufbau von schwimmfähigen Plattformen. Durch die niedrige Dichte des Füllmaterials und durch die vorzugsweise selbst schwimmenden Druckplatten kann insgesamt eine niedrige Dichte und damit hohe Tragfähigkeit erzielt werden, wobei gleichzeitig aufgrund der erfindungsgemäßen Ausbildung eine hohe Steifigkeit gegeben ist. Damit sind diese schwimmfähigen Plattformen auch mit Fahrzeugen (selbst angetrieben oder geschoben) befahrbar. Es ist aber auch möglich, andere Güter aufzuladen.

Neben schwimmfähigen Plattformen können auch andere Träger aus den erfindungsgemäßen Sandwichelementen modulartig aufgebaut werden, beispielsweise Leichtbau-Brücken oder andere Leichtbau-Träger.

## Patentansprüche

1. Sandwichelement mit einer Mittelschicht (10) aus Kunststoffschaum, sowie Außenschichten, **dadurch gekennzeichnet, dass** die Außenschichten durch - vorzugsweise ebene - Druckplatten (2, 3) gebildet sind, und einander gegenüberliegende Druckplatten unter Komprimierung der Mittelschicht (10) mittels die Mittelschicht (10) durchsetzenden Spannschrauben (4) gegeneinander verspannt sind, wobei die Mittelschicht (10) aus expandiertem thermoplastischem Kunststoff besteht und zwischen den Druckplatten (2, 3) gestaucht ist.

2. Sandwichelement nach Anspruch 1, **dadurch gekennzeichnet, dass** es langgestreckt quaderförmig ist, und die Druckplatten (2, 3) zumindest an der Oberseite und an der Unterseite angeordnet sind.

3. Sandwichelement nach einem der Ansprüche 1 oder 2, **dadurch gekennzeichnet, dass** seine Länge ein Vielfaches, mindestens das Fünffache, seiner Breite ist.

4. Sandwichelement nach einem der Ansprüche 1 bis 3, **dadurch gekennzeichnet, dass** die Druckplatten (2, 3) aus Holzwerkstoffen gefertigt sind.

5. Sandwichelement nach einem der Ansprüche 1 bis 4, **dadurch gekennzeichnet, dass** die Mittelschicht (10) aus Polystyrol besteht.

6. Sandwichelement nach einem der Ansprüche 1 bis 5, **dadurch gekennzeichnet, dass** die Dicke (D) der Druckplatten (2, 3) zwischen 1 cm und 30 cm, vorzugsweise zwischen 2 cm und 15 cm, liegt.

7. Sandwichelement nach einem der Ansprüche 1 bis 6, **dadurch gekennzeichnet, dass** die Länge (L) der Druckplatten (2, 3) zwischen 100 cm und 800 cm, vorzugsweise zwischen 150 cm und 600 cm, liegt.

8. Sandwichelement nach einem der Ansprüche 1 bis 7, **dadurch gekennzeichnet, dass** die Breite (B) der Druckplatten (2, 3) zwischen 20 cm und 80 cm, vorzugsweise zwischen 25 cm und 60 cm, liegt.

9. Sandwichelement nach einem der Ansprüche 1 bis 8, **dadurch gekennzeichnet, dass** die Dichte des zwischen Druckplatten komprimierten Füllmaterials zwischen 15 kg/m³ und 150 kg/m³ liegt.

10. Sandwichelement nach einem der Ansprüche 1 bis 9, **dadurch gekennzeichnet, dass** das Füllmaterial der Mittelschicht (10) aus einem geschlossenzelligen Schaumstoff besteht

11. Verfahren zur Herstellung eines Sandwichelementes nach einem der Ansprüche 1 bis 10, **dadurch gekennzeichnet, dass** eine formstabile Mittelschicht (10) aus Kunststoffschaum, hergestellt wird, die anschließend mit einer unteren und einer oberen Druckplatte (2, 3) versehen wird, und schließlich mittels Spannelementen (4), die jeweils die Mittelschicht (10) durchsetzen, unter Komprimierung des Füllmaterials zwischen den einander gegenüber liegenden Druckplatten (2, 3) eingespannt wird.

12. Verfahren nach Anspruch 11, **dadurch gekennzeichnet, dass** die Mittelschicht (10) durch die Druckplatten (2, 3) und die Spannelemente (4) auf ein Volumen zwischen 1% und 80%, vorzugsweise zwischen 10% und 50%, des ursprünglichen unkomprimierten Volumens komprimiert wird.

13. Verfahren zur Herstellung eines Trägers, insbesondere einer schwimmfähigen Plattform, insbesondere für Flussfahrzeuge, **dadurch gekennzeichnet, dass** mehrere Sandwichelemente (1) nach einem der Ansprüche 1 bis 10 nebeneinander gelegt, mit endseitigen Druckplatten (11, 12) versehen und durch horizontale Spannelemente (13) zu einem Träger, insbesondere einer tragfähigen Großfläche (1A, 1B, 1C), verbunden werden.

14. Verfahren nach Anspruch 13, **dadurch gekennzeichnet, dass** ein Träger, insbesondere eine tragfähige Großfläche (1A), mit mindestens einem weiteren Träger, insbesondere einer weiteren tragfähigen Großfläche (1B, 1C), durch seitliches Komprimieren mittels Spannelementen (13) auf endseitige Druckplatten (11, 12) zu einer größeren Einheit (G), insbesondere einer schwimmfähigen Plattform, verbunden wird.

15. Verfahren nach einem der Ansprüche 13 oder 14, **dadurch gekennzeichnet, dass** die horizontalen Spannelemente (13) Seile aufweisen.

16. Träger, insbesondere schwimmfähige Plattform, insbesondere hergestellt mit einem Verfahren nach einem der Ansprüche 13 bis 15, gebildet aus mehreren nebeneinanderliegenden und miteinander in Verbindung stehenden Sandwichelementen (1) nach einem der Ansprüche 1 bis 10.

## Claims

1. Sandwich element having an intermediate layer (10) of foamed plastic as well as outer layers; **characterized in that** the outer layers are formed by - preferably planar - pressure plates (2, 3), and mutually opposite pressure plates are braced against each other by means of straining screws (4) penetrating the intermediate layer (10); the intermediate layer (10) consisting of expanded thermoplastic material and being compressed between the pressure plates (2, 3).

2. Sandwich element according to Claim 1, **characterized in that** it has a longitudinally cuboid shape and **in that** the pressure plates (2, 3) are arranged at least on the top side and on the bottom side.

3. Sandwich element according to one of Claims 1 or 2, **characterized in that** its length is a multiple of its width, at least five times its width.

4. Sandwich element according to one of Claims 1 through 3, **characterized in that** the pressure plates (2, 3) are made of timber materials.

5. Sandwich element according to one of Claims 1 through 4, **characterized in that** the intermediate layer (10) is made of polystyrene.

6. Sandwich element according to one of Claims 1 through 5, **characterized in that** the thickness (D) of the pressure plates (2, 3) is between 1 cm and 30 cm, preferably between 2 cm and 15 cm.

7. Sandwich element according to one of Claims 1 through 6, **characterized in that** the length (L) of the pressure plates (2, 3) is between 100 cm and 800 cm, preferably between 150cm and 600 cm.

8. Sandwich element according to one of Claims 1 through 7, **characterized in that** the width (B) of the pressure plates (2, 3) is between 20 cm and 80 cm, preferably between 25 cm and 60 cm.

9. Sandwich element according to one of Claims 1 through 8, **characterized in that** the density of the filling material compressed between pressure plates is between 15 kg/m³ and 150 kg/m³.

10. Sandwich element according to one of Claims 1 through 9, **characterized in that** the filling material of the intermediate layer (10) consists of a closed-cell foam.

11. Method of producing a sandwich element according to one of Claims 1 through 10, **characterized in that** a dimensionally stable intermediate layer (10) of foamed plastic is produced which is subsequently provided with an upper and a lower pressure plate (2, 3) and is then braced by means of straining elements (4) penetrating the intermediate layer (10), with compression of the filling material between the mutually opposite pressure plates (2, 3) .

12. Method according to Claim 11, **characterized in that** the intermediate layer (10) is compressed, by the pressure plates (2, 3) and the straining elements (4), to a volume of between 1% and 80%, preferably between 10% and 50%, of the original uncompressed volume.

13. Method of manufacturing a carrier, in particular a buoyant platform, in particular for river vessels; **characterized in that** a plurality of sandwich elements (1) according to one of Claims 1 through 10 are placed side by side, provided with pressure plates (11, 12) at their ends and connected by horizontal tensioning elements (13) to form a carrier, in particular a large surface (1A, 1B, 1C) with good bearing capacity.

14. Method according to Claim 13, **characterized in that** a carrier, in particular a large surface (1A) with good bearing capacity, is connected to at least one additional carrier, in particular an additional large surface (1B, 1C) with good bearing capacity, to form a larger unit (G), in particular a buoyant platform, by lateral compression on pressure plates (11, 12) at their ends by means of tensioning elements (13).

15. Method according to one of Claims 13 or 14, **characterized in that** the horizontal tensioning elements (13) have ropes.

16. Carrier, in particular buoyant platform, in particular manufactured with a method according to one of Claims 13 through 15, formed by a plurality of juxtaposed and interconnected sandwich elements (1) according to one of Claims 1 through 10.

## Revendications

1. Elément sandwich avec une couche centrale (10) en mousse de matière plastique et des couches extérieures, **caractérisé en ce que** les couches extérieures sont formées de plaques de pression , de préférence planes, (2, 3) et des plaques de pression les unes en face des autres sont serrées les unes opposées aux autres par compression de la couche centrale (10) au moyen des vis de serrage (4) traversant la couche centrale (10), sachant que la couche centrale (10) est composée de matière thermoplastique expansée et est refoulée entre les plaques de pression (2, 3).

2. Elément sandwich selon la revendication 1, **caractérisé en ce qu'**il est de forme parallélépipédique allongée et les plaques de pression (2, 3) sont disposées au moins sur la face supérieure et sur la face inférieure.

3. Elément sandwich selon l'une quelconque des revendications 1 ou 2, **caractérisé en ce que** sa longueur est un multiple, au moins le quintuple, de sa largeur.

4. Elément sandwich selon l'une quelconque des revendications 1 à 3, **caractérisé en ce que** les plaques de pression (2, 3) sont fabriquées en matériaux dérivés du bois.

5. Elément sandwich selon l'une quelconque des revendications 1 à 4, **caractérisé en ce que** la couche centrale (10) est composé de polystyrène.

6. Elément sandwich selon l'une quelconque des revendications 1 à 5, **caractérisé en ce que** l'épaisseur (D) des plaques de pression (2, 3) se situe entre 1 cm et 30 cm, de préférence entre 2 cm et 15 cm.

7. Elément sandwich selon l'une quelconque des revendications 1 à 6, **caractérisé en ce que** la longueur (L) des plaques de pression (2, 3) se situe entre 100 cm et 800 cm, de préférence entre 150 cm et 600 cm.

8. Elément sandwich selon l'une quelconque des revendications 1 à 7, **caractérisé en ce que** la largeur (B) des plaques de pression (2, 3) se situe entre 20 cm et 80 cm, de préférence entre 25 cm et 60 cm.

9. Elément sandwich selon l'une quelconque des revendications 1 à 8, **caractérisé en ce que** la densité du matériau de remplissage comprimé entre les plaques de pression se situe entre 15 kg/m³ et 150 kg/m³.

10. Elément sandwich selon l'une quelconque des revendications 1 à 9, **caractérisé en ce que** le matériau de remplissage de la couche centrale (10) est composé d'une mousse à cellules fermées.

11. Procédé de fabrication d'un élément sandwich selon l'une quelconque des revendications 1 à 10, **caractérisé en ce qu'**une couche centrale de forme stable (10) est fabriquée en mousse de matière plastique, qui est dotée ensuite d'une plaque de pression inférieure et d'une plaque de pression supérieure (2, 3) et est finalement tendue entre les plaques de pression (2, 3) situées l'une en face de l'autre en comprimant le matériau de remplissage au moyen d'éléments de serrage (4), qui traversent respectivement la couche centrale (10).

12. Procédé selon la revendication 11, **caractérisé en ce que** la couche centrale (10) est comprimée par les plaques de pression (2, 3) et les éléments de serrage (4) à un volume se situant entre 1 % et 80 %, de préférence entre 10 % et 50 %, du volume non comprimé original.

13. Procédé de fabrication d'un support, en particulier d'une plateforme flottante, en particulier pour véhicules fluviaux, **caractérisé en ce que** plusieurs éléments sandwich (1) selon l'une quelconque des revendications 1 à 10, sont posés les uns à côté des autres, sont dotés de plaques de pression terminales (11, 12) et sont reliés par des éléments de serrage horizontaux (13) à un support, en particulier une grande surface porteuse (1A, 1B, 1C).

14. Procédé selon la revendication 13, **caractérisé en ce qu'**un support, en particulier une grande surface porteuse (1A), avec au moins un autre support, en particulier une autre grande surface porteuse (1B, 1C) est reliée par compression latérale au moyen d'éléments de serrage (13) sur des plaques de pression terminales (11, 12) à une unité plus grande (G), en particulier une plateforme flottante.

15. Procédé selon l'une quelconque des revendications 13 ou 14, **caractérisé en ce que** les éléments de serrage horizontaux (13) comportent des câbles.

16. Support, en particulier plateforme flottante, en particulier fabriqué avec un procédé selon l'une quelconque des revendications 13 à 15, formé de plusieurs éléments sandwich (1) situés les uns à côté des autres et se trouvant en liaison directe les uns avec les autres selon l'une quelconque des revendications 1 à 10.
